(19) Europäisches Patentamt
European Patent Office
Office européen des brevets

(11) EP 2 957 373 A1

(12) EUROPÄISCHE PATENTANMELDUNG

(43) Veröffentlichungstag:
23.12.2015 Patentblatt 2015/52

(21) Anmeldenummer: 14002374.8

(22) Anmeldetag: 10.07.2014

(51) Int Cl.:
B23K 9/013 (2006.01)          B23K 9/073 (2006.01)
B23K 9/167 (2006.01)          B23K 9/29 (2006.01)
B23K 10/00 (2006.01)          B23K 10/02 (2006.01)
B23K 35/36 (2006.01)          B23K 35/02 (2006.01)

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 16.06.2014 DE 102014008867

(71) Anmelder: Linde Aktiengesellschaft
80331 München (DE)

(72) Erfinder: Siewert, Erwan
80802 München (DE)

(54) **Schweißbrenner zum Schweißen oder Schneidbrenner zum Schneiden mittels eines Lichtbogens**

(57) Die vorliegende Erfindung betrifft einen Schweißbrenner (100) zum Schweißen oder Schneidbrenner zum Schneiden mittels eines Lichtbogens (120) mit einer nicht abschmelzenden Elektrode (10), wobei die Elektrode (10) dazu eingerichtet ist, mit einem Lichtbogenstrom bestromt zu werden, ein entsprechendes Verfahren und eine Elektrode (10) für einen Schweißbrenner (100) zum Schweißen oder einen Schneidbrenner zum Schneiden mittels eines Lichtbogens (120), wobei die Elektrode (10) einen Nutbereich (11) aufweist, wobei die Elektrode (10) in diesem Nutbereich (11) einen geringeren Durchmesser (12) aufweist als in den an diesen Nutbereich (11) angrenzenden Bereichen (11a, 11 b) der Elektrode (10), und/oder wobei die Elektrode einen Isolationsbereich aufweist, wobei zumindest ein Teil der Querschnittsfläche der Elektrode in dem Isolationsbe-reich aus einem schlecht leitenden oder nicht leitenden Material gebildet ist, und/oder wobei die Elektrode dazu eingerichtet ist, zwischen zwei Stromkontaktpunkten mit einem Heizstrom unabhängig von dem Lichtbogenstrom bestromt zu werden und/oder wobei der Schweißbrenner oder Schneidbrenner als ein Plasmaschweißbrenner zum Plasmaschweißen bzw. als ein Plasmaschneidbrenner zum Plasmaschneiden ausgebildet ist, wobei die Elektrode und ein weiteres Element des Plasmaschweiß-brenners bzw. des Plasmaschneidbrenners dazu eingerichtet sind, mit einem Pilotlichtbogenstrom bestromt zu werden, wobei eine Einstelleinrichtung für den Pilotlicht-bogenstrom vorhanden ist, mittels derer der Pilotlichtbogenstrom in Abhängigkeit von dem Lichtbogenstrom ein-stellbar ist.

Fig. 1

EP 2 957 373 A1

**Beschreibung**

Die Erfindung betrifft einen Schweißbrenner zum Schweißen oder Schneidbrenner zum Schneiden mittels eines Lichtbogens mit einer nicht abschmelzenden Elektrode, wobei die Elektrode dazu eingerichtet ist, mit einem Lichtbogenstrom bestromt zu werden. Die Erfindung betrifft weiterhin ein Verfahren zum Schweißen oder Schneiden mittels eines Lichtbogens geringer Stromstärke, eine Elektrode für einen Schweißbrenner zum Schweißen oder für einen Schneidbrenner zum Schneiden mittels eines Lichtbogens, sowie Verwendungen einer derartigen Elektrode für einen Schweißbrenner zum Schweißen oder für einen Schneidbrenner zum Schneiden.

Stand der Technik

Bei Schweißbrennern zum Schweißen und Schneidbrennern zum Schneiden mittels eines Lichtbogens mit nicht abschmelzender Elektrode werden diese Elektrode und ein zu schweißendes bzw. ein zu schneidendes Werkstück mit einer Lichtbogenstromquelle verbunden. Somit kann ein Lichtbogen zwischen der Elektrode und dem Werkstück brennen.

Lichtbögen können anhand einer statischen Lichtbogenkennlinie beschrieben werden. Diese Lichtbogenkennlinie ergibt sich aus der Lichtbogenspannung als Funktion der Lichtbogenstromstärke. Bei geringer Lichtbogenstromstärke (bis ungefähr 70 A) zeigt diese Lichtbogenkennlinie eine stark fallende Charakteristik. Dieser Bereich wird allgemein als Ayrtonscher Bereich bezeichnet. In diesem Bereich lässt sich jedoch nicht oder nur schwer ein stabiler Arbeitspunkt einstellen. Bei herkömmlichen Schweiß- bzw. Schneidbrennern kann somit in diesem Bereich geringer Lichtbogenstromstärke kaum ein stabiler Lichtbogen betrieben werden. Mit zunehmender Lichtbogenstromstärke zeigt die Lichtbogenkennlinie einen steigenden Charakter und es können stabile Arbeitspunkte eingestellt werden. Somit kann ein stabiler Lichtbogen betrieben werden.

Für bestimmte Anwendungen von Schweiß- bzw. Schneidbrennern, beispielsweise für das Schweißen von dünnen Blechen, von Folien, für das Fügen von Mikro-Bauteilen (beispielsweise in der Elektronik-Industrie), für das Plasma-Schneiden oder für das thermische Spritzen, kann es sich jedoch als notwendig erweisen, dass auch bei geringen Lichtbogenstromstärken stabile Lichtbögen betrieben werden können.

Der Erfindung liegt daher die Aufgabe zu Grunde, einen stabilen Lichtbogen bei einem Schweißbrenner zum Schweißen bzw. bei einem Schneidbrenner zum Schneiden auch bei geringen Lichtbogenstromstärken einstellen zu können.

Offenbarung der Erfindung

Diese Aufgabe wird durch die jeweiligen Gegenstände mit den Merkmalen der unabhängigen Patentansprüche gelöst. Vorteilhafte Ausgestaltungen ergeben sich aus den jeweiligen Unteransprüchen und der nachfolgenden Beschreibung.

Die Elektrode des Schweißbrenners zum Schweißen bzw. des Schneidbrenners zum Schneiden ist dazu eingerichtet, mit einem Lichtbogenstrom bestromt zu werden. Dabei ist die Elektrode mit einer entsprechenden Lichtbogenstromquelle elektrisch verbunden. Weiterhin ist ein zu schweißendes bzw. ein zu schneidendes Werkstück mit der Lichtbogenstromquelle elektrisch verbunden. Somit kann der Lichtbogen zwischen der Elektrode und dem Werkstück brennen. Die Elektrode wird dabei insbesondere als Kathode verwendet, das Werkstück als Anode.

Die Erfindung betrifft vier unterschiedliche Aspekte, welche jedoch dieselben Effekte bewirken und zu denselben Ergebnissen führen. Alle vier Aspekte lösen somit jeweils für sich alleine genommen die vorliegend zugrundeliegende Aufgabe. Selbstverständlich führen auch zweckmäßige Kombinationen der vier Aspekte zu einer möglicherweise verbesserten Lösung dieser Aufgabe.

Gemäß einem ersten erfindungsgemäßen Aspekt weist die Elektrode einen Nutbereich (Verjüngungsbereich) auf. In diesem Nutbereich weist die Elektrode einen geringeren Durchmesser auf als in den an diesen Nutbereich in axialer Richtung angrenzenden Bereichen der Elektrode. Der Nutbereich selbst erstreckt sich dabei insbesondere entlang der axialen Ausdehnung der Elektrode.

Die Elektrode ist insbesondere im Wesentlichen zylinderförmig ausgebildet (gegebenenfalls bis auf eine sich konisch verjüngende Spitze). Der Durchmesser der Elektrode innerhalb des Nutbereichs ist insbesondere konstant entlang der axialen Ausdehnung der Elektrode. Der Nutbereich ist somit insbesondere zylinderförmig ausgebildet. Alternativ kann der Durchmesser der Elektrode innerhalb des Nutbereichs auch variieren. Somit kann der Nutbereich auch eine beliebige zweckmäßige Form aufweisen. Insbesondere weist der Nutbereich eine Form zweier übereinander angeordneter Kegelstümpfe auf, wobei sich diese Kegelstümpfe in Richtung des jeweiligen an den Nutbereich angrenzenden Bereichs der Elektrode verbreiten.

Gemäß einem zweiten erfindungsgemäßen Aspekt weist die Elektrode einen Isolationsbereich auf. Zumindest ein Teil der Querschnittsfläche der Elektrode ist in dem Isolationsbereich aus einem schlecht leitenden oder nicht leitenden Material gebildet. Auch dieser Isolationsbereich erstreckt sich insbesondere entlang der axialen Ausdehnung der Elektrode.

Das schlecht oder nicht leitende Material ist insbesondere ein thermisch schlecht oder thermisch nicht leitendes Material. Dieses Material besitzt also eine vergleichsweise geringe Wärmeleitfähigkeit im Vergleich zu dem Elektrodenmaterial. Alternativ oder zusätzlich ist das schlecht oder nicht leitende Material als ein elektrisch schlecht oder elektrisch nicht leitendes Material ausgebildet. Das schlecht oder nicht leitende Material ist somit als ein thermischer und/oder elektrischer Isolator in die Elektrode eingebracht. Insbesondere wird Keramik als schlecht oder nicht leitendes Material verwendet. Im Folgenden wird das schlecht oder nicht leitende Material der Einfachheit halber als Isolator bezeichnet.

Innerhalb des Isolationsbereichs ist der Isolator insbesondere in Richtung der axialen Ausdehnung der Elektrode konstant verteilt. Der Isolator weist in Richtung der axialen Ausdehnung insbesondere konstante Abmessungen auf. Der Teil der Querschnittsfläche, der von dem Isolator gebildet wird, ist insbesondere ein zusammenhängender Teil. Insbesondere ist der Isolator als ein Kreisring ausgebildet. Der Außendurchmesser dieses Kreisrings entspricht dabei dem Durchmesser der Elektrode, der Innendurchmesser des Kreisrings ist insbesondere konstant entlang der axialen Ausdehnung der Elektrode. Der Isolator besitzt dabei auch einen positiven Einfluss auf eine mechanische Stabilität der Elektrode.

Gemäß einem dritten erfindungsgemäßen Aspekt ist die Elektrode dazu eingerichtet, zwischen zwei Stromkontaktpunkten mit einem Heizstrom unabhängig von dem Lichtbogenstrom bestromt zu werden. Die zwei Stromkontaktpunkte sind dabei auf der Elektrode selbst angeordnet. Der Heizstrom wird somit an einem ersten Stromkontaktpunkt auf die Elektrode geführt und verlässt die Elektrode an einem zweiten Stromkontaktpunkt. Im Gegensatz zu dem Lichtbogenstrom wird der Heizstrom nicht von der Elektrode auf weitere Elemente (wie beispielsweise das Werkstück oder Elemente des Schweiß- bzw. Schneidbrenners) geführt. Der Heizstrom wird insbesondere in Abhängigkeit von dem Lichtbogenstrom eingestellt. Der Schweiß- bzw. Schneidbrenner weist zu diesem Zweck insbesondere eine zweckmäßige Einstelleinrichtung zum Einstellen des Heizstroms bzw. zum Einstellen einer Heizstromstärke auf.

Ein vierter erfindungsgemäßer Aspekt betrifft einen Schweißbrenner bzw. Schneidbrenner, der als ein Plasmaschweißbrenner zum Plasmaschweißen bzw. als ein Plasmaschneidbrenner zum Plasmaschneiden ausgebildet ist. Die Elektrode dieses Plasmaschweiß- bzw. Plasmaschneidbrenners und ein weiteres Element des Plasmaschweiß- bzw. Plasmaschneidbrenners sind dazu eingerichtet, mit einem Pilotlichtbogenstrom bestromt zu werden. Der Pilotlichtbogenstrom wird in Abhängigkeit von dem Lichtbogenstrom eingestellt. Der Plasmaschweiß- bzw. Plasmaschneidbrenner weist zu diesem Zweck eine zweckmäßige Einstelleinrichtung zum Einstellen des Pilotlichtbogenstroms auf.

Beim Plasmaschweißen bzw. Plasmaschneiden werden wenigstes zwei unabhängige Gase bzw. Gasgemische verwendet. Zum einen wird ein Plasmagas bzw. Zentrumsgas zugeführt, welches durch die hohe Temperatur und die hohe Energie des Lichtbogens (zumindest teilweise) ionisiert wird. Durch den Lichtbogen wird somit ein Plasma erzeugt. Als Plasmagas wird insbesondere Argon oder ein Gasgemisch aus Argon mit Anteilen an Wasserstoff oder Helium verwendet. Zum anderen wird ein Außengas zugeführt, welches als ein Schutzgas fungiert.

Insbesondere wird eine Plasmagasdüse als weiteres Element des Plasmaschweiß- bzw. Plasmaschneidbrenners mit dem Pilotlichtbogenstrom bestromt. Somit kann zwischen der Elektrode (als Kathode) und diesem weiteren Element (als Anode) ein Pilotlichtbogen (bzw. Hilfslichtbogen) gezündet werden. Dieser Pilotlichtbogen ist ein sogenannter nicht übertragender Lichtbogen. Mittels dieses Pilotlichtbogens kann der Lichtbogen (bzw. Hauptlichtbogen) zwischen der Elektrode und dem Werkstück gezündet werden. Der Lichtbogen bzw. Hauptlichtbogen ist ein übertragender Lichtbogen.

Die Erfindung eignet sich insbesondere zum Auftragsschweißen, Verschweißen oder Verlöten von ein, zwei oder mehreren Werktücken aus metallischen Werkstoffen, insbesondere mittels Wolfram-Inertgasschweißen und Plasmaschweißen. Weiterhin eignet sich die Erfindung insbesondere zum thermischen Trennen von Werktücken aus metallischen Werkstoffen, insbesondere mittels Plasmaschneiden.

Weiterhin eignet sich die Erfindung auch für das thermische Spritzen, insbesondere für das Lichtbogenspritzen und Plasmaspritzen. Beim Plasmaspritzen wird analog zum Plasmaschweißen durch den Lichtbogen ein Plasma erzeugt. Dieses Plasma strömt in Form eines Plasmajets in Richtung des (zu beschichtenden) Werkstücks. In den Plasmajet wird ein Pulver eingebracht, welches durch die Temperatur des Plasmas aufgeschmolzen wird. Der Plasmajet reißt das aufgeschmolzene Pulver mit, wodurch das aufgeschmolzene Pulver in Richtung des Werkstücks befördert wird.

Vorteile der Erfindung

Durch die vier unterschiedlichen Aspekte der Erfindung wird der Effekt erzielt, dass der Lichtbogen stabil an der Elektrode ansetzt und auch bei geringer Lichtbogenstromstärke stabil brennt. Weiterhin ermöglichen es alle vier unterschiedlichen Aspekte der Erfindung jeweils eine Temperatur bzw. eine Temperaturverteilung in der Elektrode unabhängig von der Lichtbogenstromstärke zu beeinflussen. Weiterhin wird durch alle vier unterschiedlichen Aspekte der Erfindung jeweils eine thermische Emission von Elektronen aus der Elektrode erhöht. Diese drei Effekte, welche durch die vier Aspekte der Erfindung erzielt werden, werden im Folgenden detailliert erläutert:

Insbesondere wird die Temperatur der Elektrode gezielt beeinflusst, kontrolliert und/oder eingestellt. Somit wird durch die Erfindung eine Wärmestabilisierung der Elektrode erreicht. Die Temperatur bzw. Temperaturverteilung der Elektrode ist insbesondere anhängig von der Geometrie der Elektrode sowie einer Kühlung des Schweiß- bzw. Schneidbrenners.

Die Temperatur bzw. Temperaturverteilung der Elektrode bestimmt, auf welche Art Elektronen aus der Elektrode emittiert werden. Zum einen können Elektronen mittels Feldemission durch elektromagnetische Felder aus der Elektrode emittiert werden. Diese Art der Elektronenemission führt zu instabilen Lichtbögen. Zum anderen können Elektronen mittels thermischer Emission aufgrund der Temperatur der Elektrode emittiert werden. Durch thermische Emission können Elektronen die Elektrode einfach verlassen und in das Werkstück übergehen. Durch thermische Emission kann der Lichtbogen stabil an der Elektrode ansetzen und stabil brennen. Durch die Beeinflussung der Temperatur bzw. der Temperaturverteilung in der Elektrode mittels eines jeden der vier Aspekte der Erfindung kann die thermische Emission der Elektrode gezielt beeinflusst und erhöht werden. Dadurch wird gewährleistet, dass der Lichtbogen stabil an der Elektrode ansetzt und auch bei geringeren Lichtbogenstromstärken stabil brennt.

Durch jeden der vier Aspekte der Erfindung wird zudem ein sicheres Zünden des Lichtbogens ermöglicht. Die Zündspannung, also der Wert der Lichtbogenspannung, welcher zum Zünden des Lichtbogens benötigt wird, kann verringert werden. Somit kann eine Gefahr der Beeinflussung von Peripheriegeräten verringert werden.

Durch die Erfindung wird es ermöglicht, dass insbesondere bei geringen Lichtbogenstromstärken (insbesondere bei Lichtbogenstromstärken von unter etwa 70 A) ein stabiler Lichtbogen eingestellt werden kann. Die Erfindung eignet sich daher insbesondere für Anwendungen von Schweiß- bzw. Schneidbrennern, bei welchen es notwendig ist, dass auch bei geringen Lichtbogenstromstärken stabile Lichtbögen betrieben werden, beispielsweise beim Schweißen von dünnen Blechen, von Folien, beim Fügen von Mikro-Bauteilen (beispielsweise in der Elektronik-Industrie), beim Plasma-Schneiden oder beim thermisches Spritzen.

Durch die erhöhte Stabilität des Lichtbogens wird somit auch die Stabilität des Schweiß- bzw. Schneidprozesses erhöht. Weiterhin wird die Qualität und Reproduzierbarkeit des geschweißten bzw. geschnittenen Werkstücks verbessert. Durch die Beeinflussung der Temperatur bzw. Temperarturverteilung der Elektrode kann gewährleistet werden, dass die Elektrode im Zuge des Schweiß- bzw. Schneidprozesses optimal belastet wird. Somit kann ein Verschleiß der Elektrode verringert und eine Lebenszeit der Elektrode erhöht werden. Somit kann ein Unterbrechen des Schweiß- bzw. Schneidprozesses vermieden werden. Kosten für den Schweiß- bzw. Schneidprozess können verringert werden. Weiterhin wird eine hohe Richtungsstabilität des Lichtbogens gewährleistet. Somit wird insbesondere ein sicheres Aufschmelzen von zwei Blechkanten ermöglicht.

Durch den Nutbereich im Zuge des ersten Aspekts der Erfindung wird eine Elektrodenspitze erwärmt bzw. eine Wärmeableitung reduziert. Als Elektrodenspitze ist in diesem Zusammenhang der Bereich der Elektrode zwischen Nutbereich und einem lichtbogenseitigen Ende der Elektrode, an welchem der Lichtbogen an der Elektrode ansetzt, zu verstehen. Die Elektrode und insbesondere die Elektrodenspitze werden durch den Lichtbogenstrom und den Lichtbogen erhitzt. Durch den Nutbereich kann Wärme nicht so leicht aus der Elektrodenspitze in die restliche Elektrode bzw. an andere Elemente des Schweiß- bzw. Schneidbrenners abgeleitet werden.

Durch die vergleichsweise geringe Querschnittsfläche der Elektrode innerhalb des Nutbereichs wird die Stromdichte des Lichtbogenstroms und der elektrische Widerstand innerhalb des Nutbereichs erhöht im Vergleich zu den an den Nutbereich angrenzenden Bereichen der Elektrode. Somit nimmt eine Widerstandserwärmung durch den Lichtbogenstrom zu. Somit kann die Temperaturverteilung in der Elektrode, insbesondere anhand der Geometrie des Nutbereichs, im Wesentlichen unabhängig von der Lichtbogenstromstärke beeinflusst und die thermische Emission der Elektrode erhöht werden.

Diese Widerstandserwärmung $\Delta W$ bzw. eine dadurch erzeugte Joulesche Wärme über eine Zeitdauer $\Delta t$ ergibt sich aus der elektrischen Leistung P des Lichtbogenstroms wie folgt:

$$\Delta W = P\Delta t = I^2 \rho \frac{l_1}{A} \Delta t$$

mit der Stromstärke des Lichtbogenstroms $I$, der Querschnittsfläche der Elektrode $A$ und deren spezifischem elektrischen Widerstand $\rho$. Eine erste freie Länge $l_1$ ist die Länge zwischen dem Ansatz des Lichtbogens an der Elektrode und einem Stromübertragungspunkt, an welchem der Lichtbogenstrom auf die Elektrode übertragen wird. Wie aus der Formel ersichtlich ist, ist die Widerstandserwärmung $\Delta W$ umso größer, je kleiner die Querschnittsfläche der Elektrode A in dem Nutbereich ist.

Analog wird auch durch den Isolationsbereich im Zuge des zweiten Aspekts der Erfindung eine Elektrodenspitze erwärmt bzw. eine Wärmeableitung reduziert. In diesem Zusammenhang ist als Elektrodenspitze der Bereich der Elektrode zwischen Isolationsbereich und lichtbogenseitigem Ende der Elektrode zu verstehen.

Durch den Heizstrom wird die Elektrode im Zuge des dritten Aspekts "fremd geheizt". Durch den Heizstrom erfolgt somit eine Widerstandserwärmung der Elektrode. Durch den Stromfluss aufgrund des Heizstroms sowie aufgrund des elektrischen Widerstands der Elektrode findet eine Erwärmung der Elektrode statt. Die dabei erzeugte Joulesche Wärme ist proportional zu der umgesetzten elektrischen Leistung sowie einer entsprechenden Zeitdauer. Die erzeugte Wärme und somit die Erwärmung der Elektrode sind frei einstellbar. Durch den Heizstrom wird die Elektrode zusätzlich zu dem Lichtbogenstrom und dem Lichtbogen erhitzt. Somit wird die Temperaturverteilung in der Elektrode unabhängig von der Lichtbogenstromstärke beeinflusst und die thermische Emission der Elektrode erhöht.

Weiterhin kann die Elektrode durch den Heizstrom erwärmt werden, ohne dass ein Lichtbogen brennt. Eine kalte Elektrode kann somit vorgewärmt werden und ein sicheres Zünden des Lichtbogens ohne eine hohe Zündspannung kann ermöglicht werden.

Insbesondere wird der Heizstrom bzw. die Heizstromstärke in Abhängigkeit von der Lichtbogenstromstärke eingestellt. Insbesondere wird der Heizstrom reduziert, wenn der Lichtbogenstrom erhöht wird.

Im Zuge des vierten Aspekts wird der Pilotlichtbogenstrom an den Lichtbogenstrom angepasst. Bei herkömmlichen Plasmaschweiß- bzw. Plasmaschneidbrennern wird der Pilotlichtbogen zumeist nur zum Zünden des Lichtbogens verwendet und danach abgeschaltet. Im Zuge der Erfindung wird der Pilotlichtbogen jedoch auch bei brennendem Lichtbogen aufrechterhalten. Durch den Pilotlichtbogen wird die Temperaturverteilung in der Elektrode unabhängig von der Lichtbogenstromstärke beeinflusst und die thermische Emission der Elektrode erhöht. Durch den Pilotlichtbogenstrom wird die Temperatur der Elektrode erhöht und somit der Lichtbogen insbesondere bei geringen Lichtbogenstromstärken stabilisiert.

Vorteilhafterweise sind der Nutbereich und/oder der Isolationsbereich vergleichsweise nahe an dem lichtbogenseitigen Ende der Elektrode in Relation zu der axialen Ausdehnung des bestromten Bereichs der Elektrode angeordnet. Unter "bestromten Bereich der Elektrode" ist dabei der Bereich der Elektrode zwischen dem lichtbogenseitigen Ende und dem Stromübertragungspunkt zu verstehen, an welchem der Lichtbogenstrom auf die Elektrode übertragen wird. Bevorzugt sind der Nutbereich und/oder der Isolationsbereich in einem bestimmten Abstand zu dem lichtbogenseitigen Ende der Elektrode angeordnet. Unter vergleichsweise nahe ist zu verstehen, dass dieser bestimmte Abstand insbesondere maximal 20% der axialen Ausdehnung des bestromten Bereichs der Elektrode beträgt. Der bestimmte Abstand beträgt dabei insbesondere zwischen 1 mm und 5 mm.

Somit wird gewährleistet, dass die Elektrodenspitze relativ kurz bzw. klein ausgebildet ist im Vergleich zu dem bestromten Bereich der Elektrode. Somit wird erreicht, dass sich die Elektrodenspitze effektiv und schnell aufheizen kann und dass eine hohe Temperatur in der Elektrodenspitze eingestellt werden kann. Somit wird die erwünschte Stabilität des Lichtbogens schnell erreicht.

Vorzugsweise ist die gesamte Querschnittsfläche der Elektrode in dem Isolationsbereich aus dem schlecht leitenden oder nicht leitenden Material (bzw. aus dem Isolator) gebildet. Somit kann die Wärmeableitung aus der Elektrodenspitze möglichst gering gehalten und auf ein Minimum reduziert werden. Der Isolator ist insbesondere von dem lichtbogenseitigen Ende der Elektrode aus gesehen hinter der elektrischen Verbindung von der Elektrode zu der Lichtbogenstromquelle angeordnet. Somit kann der Lichtbogenstrom ungehindert über den Lichtbogen zwischen Elektrode und dem zu schweißenden bzw. dem zu schneidenden Werkstück fließen. Durch die möglichst geringe Wärmeableitung kann die Temperatur der Elektrodenspitze gleichzeitig möglichst stark erhöht werden.

Bevorzugt ist die Elektrode an zwei Stromkontaktpunkten mit einer Heizstromquelle zur Bestromung mit dem Heizstrom verbunden. Die Heizstromquelle kann dabei zusätzlich zu der Lichtbogenstromquelle vorhanden sein. Alternativ können Heizstromquelle und Lichtbogenstromquelle auch als eine gemeinsame Stromquelle ausgebildet sein, die unabhängig voneinander den Heizstrom und den Lichtbogenstrom bereitstellt. Insbesondere können die Positionen der zwei Stromkontaktpunkte auf der Elektrode verändert werden. Somit kann der Abstand der zwei Stromkontaktpunkte auf der Elektrode zueinander verändert werden. Dieser Abstand bestimmt eine zweite freie Länge der Elektrode, in welcher der Heizstrom fließt. Insbesondere kann mittels dieser zweiten freien Länge die Erwärmung der Elektrode eingestellt werden.

Insbesondere wird mittels der Stromstärke $I$ des Heizstroms und mittels der zweiten freien Länge $l_2$ eine Joulesche Wärme eingestellt. Als Joulesche Wärme wird die Wärmeenergie pro Zeit bezeichnet, welche durch fortwährende Verluste von elektrischer Energie in einem Leiter aufgrund der Stromstärke und des Widerstandsbelags (elektrischer Widerstand des Leiters bezogen auf dessen Länge) entsteht. Die Joulesche Wärme $\Delta W$ über eine Zeitdauer $\Delta t$ ergibt sich aus dieser elektrischen Leistung P wie folgt:

$$\Delta W = P\Delta t = I^2 \rho \frac{l_2}{A} \Delta t$$

mit der Querschnittsfläche der Elektrode A und deren spezifischem elektrischen Widerstand $\rho$.

Bevorzugt ist die Elektrode aus reinem Wolfram, oder Wolfram mit Dotierungen (beispielsweise Cer, Thorium, Lanthan und/oder andere seltene Erden) ausgebildet. Derartige Elektroden eignen sich insbesondere für das Wolfram-Inertgasschweißen und das Plasmaschweißen. Weiter bevorzugt ist die Elektrode aus Hafnium, aus Zirkonium und/oder aus Tantal ausgebildet. Derartige Elektroden eignen sich insbesondere für das Plasmaschneiden. Eine Elektrode aus Wolfram mit Dotierungen aus seltenen Erden bietet sich besonders an. Insbesondere liegen diese Dotierungen aus seltenen Erden als Oxide in einer Mischung mit Wolfram vor.

Vorzugsweise weist der Schweiß- bzw. Schneidbrenner einen Temperatursensor auf, der dazu eingerichtet ist, eine Temperatur der Elektrode zu bestimmen. Weiterhin ist der Schweiß- bzw. Schneidbrenner bzw. die Heizstromquelle dazu eingerichtet, den Heizstrom bzw. eine Stromstärke des Heizstroms einzustellen. Zu diesem Zweck kann insbesondere eine zweckmäßige Heizstrom-Einstelleinrichtung vorhanden sein. Der Heizstrom wird vorzugsweise in Abhängigkeit von der gemessenen Temperatur der Elektrode eingestellt. Somit kann die Temperatur der Elektrode mittels des Heizstroms geregelt und oder gesteuert werden.

Vorteilhafterweise wird der Pilotlichtbogenstrom erhöht, wenn der Lichtbogenstrom reduziert wird. Bei geringen Lichtbogenstromstärken wird der Pilotlichtbogen somit mit einem erhöhten Pilotlichtbogenstrom betrieben. Bei geringen Lichtbogenstromstärken kann der Lichtbogen somit umso stärker mittels des Pilotlichtbogens stabilisiert werden.

Vorzugsweise wird der Pilotlichtbogenstrom reduziert, wenn der Lichtbogenstrom erhöht wird. Da der Lichtbogen bei höheren Lichtbogenstromstärken aufgrund der Lichtbogenkennlinie stabil brennen kann, kann der Pilotlichtbogen bei höheren Lichtbogenstromstärken zunehmend mit geringerem Pilotlichtbogenstrom betrieben werden.

Bevorzugt wird der Pilotlichtbogenstrom reduziert, wenn der Lichtbogenstrom einen ersten Grenzwert erreicht. Dieser erste Grenzwert beträgt vorzugsweise 100 A. Insbesondere wenn der Lichtbogenstrom diesen ersten Grenzwert überschreitet, wird der Pilotlichtbogenstrom reduziert. Weiter bevorzugt wird der Pilotlichtbogenstrom abgeschaltet, wenn der Lichtbogenstrom einen zweiten Grenzwert erreicht bzw. überschreitet. Bevorzugt beträgt dieser zweite Grenzwert 200 A. Ab diesem zweiten Grenzwert brennt der Lichtbogen stabil genug, dass der Pilotlichtbogen abgeschaltet werden kann. Wenn die Lichtbogenstromstärke den zweiten Grenzwert wieder unterschreitet, kann der Pilotlichtbogenstrom wieder eingeschaltet und mit sinkender Lichtbogenstromstärke konsekutiv erhöht werden.

Analog zu obiger Beschreibung der Einstellung des Pilotlichtbogenstroms in Abhängigkeit von dem Lichtbogenstrom wird insbesondere auch der Heizstrom in Abhängigkeit von dem Lichtbogenstrom eingestellt.

Bevorzugt wird die Elektrode mit dem Heizstrom bestromt, bevor der Lichtbogen gezündet wird, insbesondere bevor die Elektrode mit dem Lichtbogenstrom bestromt wird. Die Elektrode wird somit mittels des Heizstroms auf eine zweckmäßige Temperatur vorgeheizt. Somit kann bereits vor dem Zünden des Lichtbogens eine thermische Emission der Elektrode eingestellt werden. Die thermische Emission kann somit bereits zu Beginn des Schweißens bzw. Schneidens ausgenutzt werden, sobald der Lichtbogen gezündet wurde. Weiterhin wird das Zünden des Lichtbogens verbessert. Insbesondere wird somit eine Zündspannung, also der Lichtbogenspannungswert, welcher zum Zünden des Lichtbogens benötigt wird, reduziert.

Insbesondere in automatischen Schweiß- bzw. Schneidprozessen kann somit ein sicheres Zünden des Lichtbogens erreicht werden. Ein sicheres Zünden des Lichtbogens ist in derartigen Prozessen von erheblicher Bedeutung. Kann der Lichtbogen nicht sicher gezündet werden, kann dies zu erheblichem Verschleiß der Elektrode führen, was wiederum zu Zündaussetzern, Prozessausfällen oder Fehlern in dem geschweißten bzw. geschnittenen Werkstück und somit zu erhöhten Kosten führen kann. Durch den Heizstrom im Sinne der Erfindung können diese Nachteile jedoch überwunden werden.

Die Erfindung betrifft weiterhin ein Verfahren zum Schweißen oder Schneiden, eine Elektrode für einen Schweißbrenner zum Schweißen oder einen Schneidbrenner zum Schneiden, sowie Verwendungen einer derartigen Elektrode für einen Schweißbrenner zum Schweißen oder für einen Schneidbrenner zum Schneiden. Ausgestaltungen dieses erfindungsgemäßen Verfahrens, dieser erfindungsgemäßen Elektrode und der erfindungsgemäßen Verwendungen ergeben sich aus der obigen Beschreibung des erfindungsgemäßen Schweißbrenners zum Schweißen bzw. Schneidbrenners zum Schneiden in analoger Art und Weise.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im Folgenden unter Bezugnahme auf die Zeichnungen ausführlich beschrieben.

Kurze Beschreibung der Zeichnungen

Figur 1 zeigt schematisch eine bevorzugte Ausgestaltung eines erfindungsgemäßen Schweißbrenners zum Schweißen gemäß einem ersten bevorzugten Aspekt der Erfindung.

Figur 2 zeigt schematisch eine bevorzugte Ausgestaltung eines erfindungsgemäßen Schweißbrenners zum Schweißen gemäß einem zweiten bevorzugten Aspekt der Erfindung.

Figur 3 zeigt schematisch eine bevorzugte Ausgestaltung eines erfindungsgemäßen Schweißbrenners zum Schweißen gemäß einem dritten bevorzugten Aspekt der Erfindung.

Figur 4    zeigt schematisch eine bevorzugte Ausgestaltung eines erfindungsgemäßen Schweißbrenners zum Schweißen gemäß einem vierten bevorzugten Aspekt der Erfindung.

Ausführungsform(en) der Erfindung

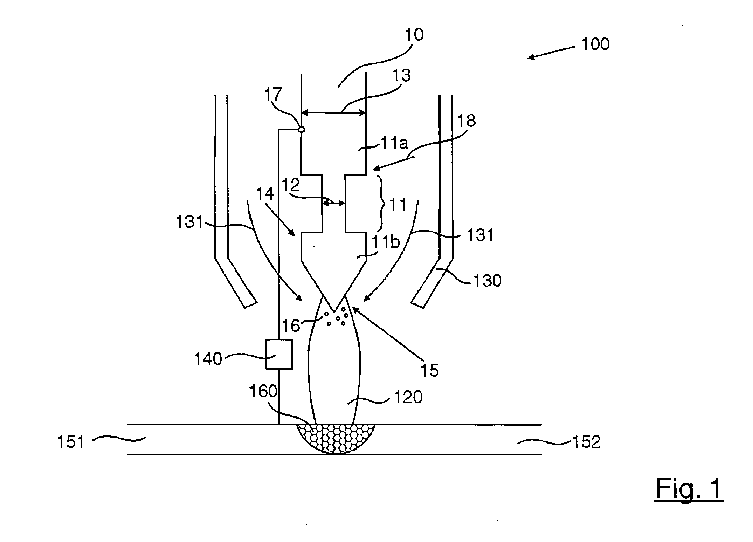

In den Figuren 1 bis 4 ist jeweils eine bevorzugte Ausgestaltung eines erfindungsgemäßen Schweißbrenners zum Schweißen schematisch dargestellt und mit 100, 200, 300 bzw. 400 bezeichnet. Der jeweilige Schweißbrenner 100, 200, 300 bzw. 400 weist jeweils eine bevorzugte Ausgestaltung einer erfindungsgemäßen Elektrode 10, 20, 30 bzw. 40 auf. Die Schweißbrenner 100, 200, 300 bzw. 400 sind jeweils dazu eingerichtet, eine bevorzugte Ausführungsform eines erfindungsgemäßen Verfahrens durchzuführen.

Die Schweißbrenner 100, 200 und 300 in den Figuren 1, 2 bzw. 3 sind in diesem Beispiel jeweils als ein Wolfram-Inertgasschweißbrenner zum Wolfram-Inertgasschweißen ausgebildet. Der Schweißbrenner 400 ist als ein Plasmaschweißbrenner zum Plasmaschweißen ausgebildet.

Im Folgenden werden zunächst (baugleiche) Elemente beschrieben, welche jeweils in den Figuren 1 bis 4 auf analoge Weise verwendet werden. Diese (baugleichen) Elemente sind in den Figuren 1 bis 4 mit denselben Bezugszeichen versehen. Anschließend werden die unterschiedlichen Elemente in den Figuren 1 bis 4, die jeweils gemäß bevorzugten Ausgestaltungen der Erfindung ausgestaltet sind, im Detail erläutert.

Mittels des Schweißbrenners 100, 200, 300 oder 400 wird durch einen Fügevorgang ein erstes Werkstück 151 mit einem zweiten Werkstück 152 verschweißt. Die Werkstücke 151 und 152 und die Elektrode 10, 20, 30 bzw. 40 sind mit einer Lichtbogenstromquelle 140 elektrisch verbunden. Die Elektrode 10, 20, 30 bzw. 40 wird somit mit einem Lichtbogenstrom bestromt. Die Elektrode 10, 20, 30 bzw. 40 wird dabei insbesondere als Kathode verwendet und die Werkstücke 151 und 152 als Anode.

Ein Lichtbogen 120 brennt zwischen der Elektrode 10, 20, 30 bzw. 40 und den Werkstücken 151 und 152. Durch den Lichtbogen 120 werden das erste und das zweite Werkstück 151 und 152 zumindest teilweise aufgeschmolzen, wodurch ein Schmelzbad 160 entsteht.

Der Schweißbrenner 100 weist weiterhin eine Schutzgasdüse 130 auf, um dem Schweißprozess in Richtung des Lichtbogens 120 bzw. in Richtung des Schmelzbads 160 ein Schutzgas in Form einer Schutzgasströmung zuzuführen, angedeutet durch Bezugszeichen 131.

Der Schweißbrenner 100 und die Elektrode 10 in Figur 1 sind gemäß einer bevorzugten Ausgestaltung eines ersten Aspekts der Erfindung ausgestaltet. Die Elektrode 10 ist in diesem Beispiel aus Wolfram mit einer Dotierung aus seltenen Erden ausgebildet.

Die Elektrode 10 weist dabei einen Nutbereich 11 auf. Der Nutbereich 11 erstreckt sich in Form einer radialen Vertiefung in axialer Richtung der Elektrode 10. Innerhalb dieses Nutbereichs weist die Elektrode einen Durchmesser 12 auf. Der Durchmesser 12 ist dabei in axialer Ausdehnung der Elektrode konstant.

An diesen Nutbereich 11 grenzen unmittelbar ein Bereich 11a und 11b an. In diesen Bereichen 11a und 11b weist die Elektrode 10 einen Durchmesser 13 auf, der beispielsweise zwischen 1,0 und 6,4 mm beträgt.

Der Nutbereich 11 weist somit einen geringeren Durchmesser 12 auf als in den an den Nutbereich angrenzenden Bereichen 11a und 11b.

Eine Elektrodenspitze 14 ist im Folgenden als der Bereich der Elektrode 10 zwischen dem Nutbereich 11 und einem lichtbogenseitigen Ende 15 der Elektrode 10 zu verstehen. An diesem lichtbogenseitigen Ende 15 der Elektrode setzt der Lichtbogen 120 an der Elektrode 10 an. Die Elektrode 10 verjüngt sich konisch zu dem lichtbogenseitigen Ende 15 hin.

Der Nutbereich 11 ist vergleichsweise nahe an dem lichtbogenseitigen Ende 15 der Elektrode 10 angeordnet. Eine axiale Ausdehnung der Elektrodenspitze 14 und somit ein Abstand zwischen Nutbereich 11 und lichtbogenseitigem Ende 15 beträgt dabei insbesondere maximal 20% der axialen Ausdehnung eines bestromten Bereichs 18 der Elektrode 10. Dieser bestromte Bereich 18 der Elektrode 10 ist dabei der Bereich zwischen lichtbogenseitigem Ende 15 und einem Stromübertragungspunkt 17, an welchem der Lichtbogenstrom auf die Elektrode 10 übertragen wird.

Die axiale Ausdehnung der Elektrodenspitze 14 bzw. der Abstand zwischen Nutbereich 11 und lichtbogenseitigem Ende 15 beträgt beispielsweise zwischen 1 mm und 5 mm.

Durch den Nutbereich 11 bzw. durch den geringen Durchmesser 12 des Nutbereichs 11 kann eine Wärmeableitung aus der Elektrodenspitze 14 hinaus reduziert werden und die Widerstandserwärmung erhöht werden. Somit wird die Temperatur innerhalb der Elektrodenspitze 14 erhöht und die Temperaturverteilung innerhalb der Elektrode 10 beeinflusst.

Weiterhin wird somit eine thermische Emission von Elektronen erhöht. Durch die erhöhte Temperatur innerhalb der Elektrodenspitze 14 können Elektronen die Elektrode 10 durch thermische Effekte verlassen. Diese thermisch emittierten Elektronen sind in Figur 1 angedeutet durch Bezugszeichen 16.

Durch die erhöhte thermische Emission von Elektronen 16 wird erreicht, dass der Lichtbogen 120 stabil an der Elektrode 10 ansetzt und stabil brennt. Die thermische Emission von Elektronen 16 wird wiederum durch die Erhöhung der Temperatur in der Elektrodenspitze 14 und durch die Beeinflussung der Temperaturverteilung innerhalb der Elektrode 10 erhöht. Weiterhin wird die thermische Emission von Elektronen 16 durch die erhöhte Widerstandserwärmung und die reduzierte Wärmeableitung erhöht.

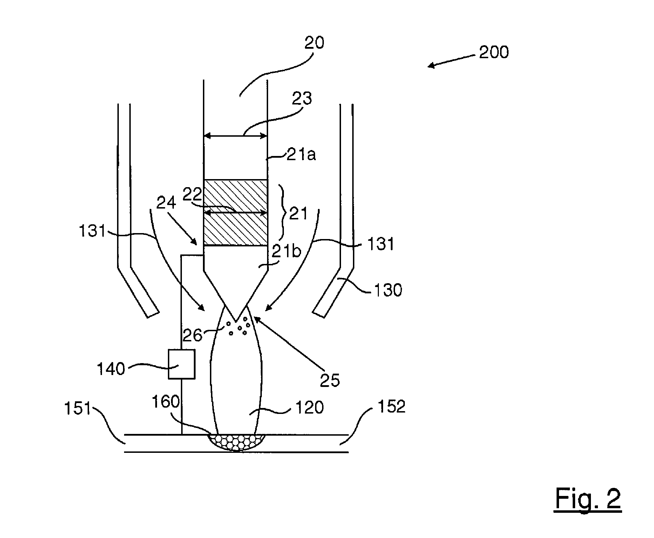

Der Schweißbrenner 200 und die Elektrode 20 in Figur 2 sind gemäß einer bevorzugten Ausgestaltung eines zweiten Aspekts der Erfindung ausgestaltet.

Die Elektrode 20 weist dabei einen Isolationsbereich 21 auf. Der Isolationsbereich 21 erstreckt sich in axialer Ausdehnung der Elektrode 20. In diesem Beispiel erstreckt sich der Isolationsbereich 21 über die gesamte Querschnittsfläche der Elektrode 20. Der Isolationsbereich 21 weist somit einen Durchmesser 22 auf, welcher identisch mit einem Durchmesser 23 der Elektrode 20 in einem an den Isolationsbereich 21 angrenzenden Bereich 21 a bzw. 21 b der Elektrode 20 ist. Der Durchmesser 22 ist entlang der axialen Ausdehnung der Elektrode 20 konstant. Der Isolationsbereich 21 kann beispielsweise auch als ein Kreisring ausgebildet sein. Der Kreisring übt dabei positiven Einfluss auf die mechanische Stabilität der Elektrode 20 aus.

Der Isolationsbereich 21 ist aus einem elektrisch und thermisch schlecht leitenden Material ausgebildet, in diesem Beispiel aus Keramik. Die restlichen Bereiche der Elektrode 20 sind in diesem Beispiel aus Wolfram mit einer Dotierung aus seltenen Erden ausgebildet.

Eine Elektrodenspitze 24 ist im Folgenden als der Bereich der Elektrode 20 zwischen Isolationsbereich 21 und lichtbogenseitigen Ende 25 der Elektrode 20 zu verstehen. Der Lichtbogenstrom wird innerhalb der Elektrodenspitze 24 auf die Elektrode 20 geleitet.

Eine axiale Ausdehnung der Elektrodenspitze 24 bzw. ein Abstand zwischen Isolationsbereich 11 und lichtbogenseitigem Ende 25 beträgt beispielsweise 1 mm bis 5 mm

Analog zu dem Nutbereich 11 wird durch den Isolationsbereich 21 eine Wärmeableitung aus der Elektrodenspitze 24 hinaus reduziert. Somit wird die Temperatur innerhalb der Elektrodenspitze 24 erhöht und die Temperaturverteilung innerhalb der Elektrode 20 beeinflusst. Weiterhin wird somit eine thermische Emission von Elektronen 26 erhöht. Analog zu dem Nutbereich 11 wird auch durch den Isolationsbereich erreicht, dass der Lichtbogen 120 stabil an der Elektrode 20 ansetzt und stabil brennt.

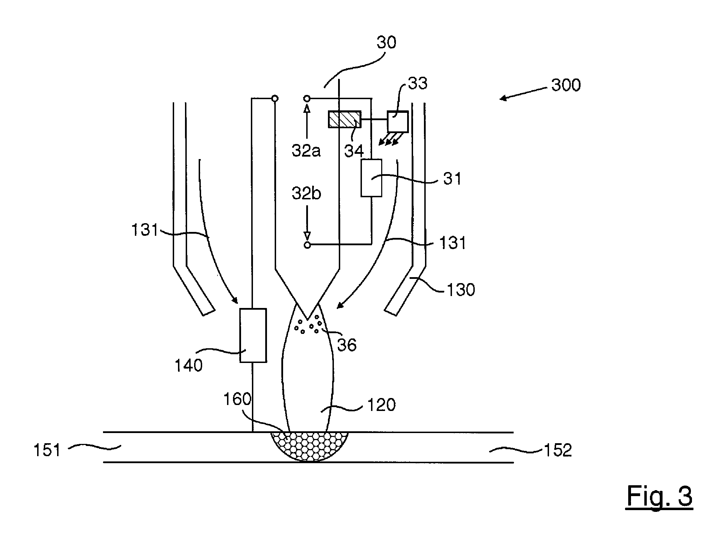

Der Schweißbrenner 300 und die Elektrode 30 in Figur 3 sind gemäß einer bevorzugten Ausgestaltung eines dritten Aspekts der Erfindung ausgestaltet. Die Elektrode 30 ist in diesem Beispiel aus Wolfram mit einer Dotierung aus seltenen Erden ausgebildet.

Die Elektrode 30 ist zusätzlich zu der Lichtbogenstromquelle 140 mit einer Heizstromquelle 31 elektrisch verbunden und wird unabhängig von dem Lichtbogenstrom mit einem Heizstrom bestromt. Ein erster Stromkontaktpunkt 32a auf der Elektrode 30 ist mit einem ersten Pol der Heizstromquelle 31 elektrisch verbunden, ein zweiter Stromkontaktpunkt 32b auf der Elektrode 30 ist mit einem zweiten Pol der Heizstromquelle 31 elektrisch verbunden. Eine Heizstrom-Einstelleinrichtung 33 ist dazu eingerichtet, den Heizstrom einzustellen und insbesondere die Heizstromstärke zu regeln.

Weiterhin ist ein Temperatursensor 34 vorgesehen, mittels welchem die Temperatur der Elektrode 30 bestimmt wird. Die Heizstrom-Einstelleinrichtung 33 ist insbesondere dazu eingerichtet, den Heizstrom in Abhängigkeit von der Temperatur der Elektrode 30 einzustellen. Der Temperatursensor 34 übermittelt zu diesem Zweck die bestimmte Temperatur der Elektrode 30 an die Heizstrom-Einstelleinrichtung 33.

Durch den Heizstrom werden die Temperatur und die Temperaturverteilung innerhalb der Elektrode 30 erhöht bzw. beeinflusst. Insbesondere wird die Temperatur dabei durch die Heizstrom-Einstelleinrichtung 33 auf vorher bestimmte Werte eingestellt. Durch die erhöhte Temperatur innerhalb der Elektrode 30 und die Beeinflussung der Temperaturverteilung innerhalb der Elektrode 30 wird die thermische Emission von Elektronen 36 erhöht. Durch die erhöhte thermische Emission von Elektronen 36 wird erreicht, dass der Lichtbogen 120 stabil an der Elektrode 30 ansetzt und stabil brennt.

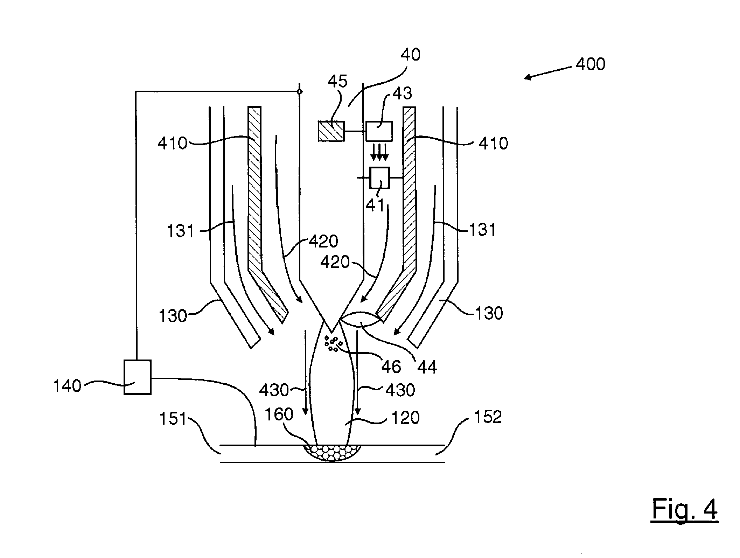

Der Schweißbrenner 400 und die Elektrode 40 in Figur 4 sind gemäß einer bevorzugten Ausgestaltung eines vierten Aspekts der Erfindung ausgestaltet. Der Schweißbrenner 400 ist dabei als Plasmaschweißbrenner ausgestaltet. Die Elektrode 40 ist in diesem Beispiel aus Wolfram mit einer Dotierung aus seltenen Erden ausgebildet.

Der Schweißbrenner 400 weist eine Plasmagasdüse 410 auf. Mittels dieser Plasmagasdüse 410 wird in Richtung des Werkstücks 151 ein Plasmagas, beispielsweise Argon, in Form einer Plasmagasströmung 420 zugeführt. Dieses Plasmagas wird durch die Wärme des Lichtbogens 120 ionisiert und bildet einen Plasmalichtbogen 430 in Richtung des Werkstücks 151.

Die Elektrode 40 und die Plasmagasdüse 410 sind mit einer Pilotlichtbogenstromquelle 41 elektrisch verbunden. Somit wird die Elektrode 40 zusätzlich zu dem Lichtbogenstrom mit einem Pilotlichtbogenstrom bestromt. Eine Einstelleinrichtung 43 für den Pilotlichtbogenstrom ist dazu eingerichtet, den Pilotlichtbogenstrom einzustellen, um den Pilotlichtbogen 44 zu steuern.

Der Pilotlichtbogenstrom wird dabei in Abhängigkeit von dem Lichtbogenstrom eingestellt. Durch den Pilotlichtbogenstrom wird somit auch die Temperaturverteilung in der Elektrode 40 beeinflusst. Durch die Temperaturverteilung wird der Lichtbogen 120 stabilisiert.

Auch bei der Elektrode 40 kann insbesondere ein Temperatursensor 45 vorgesehen sein. Insbesondere kann die Einstelleinrichtung 43 für den Pilotlichtbogenstrom dazu eingerichtet sein, den Pilotlichtbogenstrom in Abhängigkeit von der Temperatur der Elektrode 40 einzustellen, welche mittels dieses Temperatursensors 45 bestimmt wird.

Die Elektrode 40 wird mit dem Pilotlichtbogenstrom bestromt, so lange die Lichtbogenstromstärke geringer als 200 A ist. Die Pilotlichtbogenstromstärke wird mit sinkender Lichtbogenstromstärke kontinuierlich erhöht. Somit wird erreicht, dass auch der Lichtbogen 120 auch bei geringen Lichtbogenstromstärken stabil an der Elektrode 40 ansetzt und stabil brennt.

Durch die erhöhte Temperatur innerhalb der Elektrode 40 und die Beeinflussung der Temperaturverteilung innerhalb der Elektrode 40 wird die thermische Emission von Elektronen 46 erhöht.

Bezugszeichenliste

| | |
|---|---|
| 100 | Schweißbrenner, Wolfram-Inertgasschweißbrenner |
| 120 | Lichtbogen |
| 130 | Schutzgasdüse |
| 131 | Schutzgas, Schutzgasströmung |
| 140 | Lichtbogenstromquelle |
| 151 | erstes Werkstück |
| 152 | zweites Werkstück |
| 160 | Schmelzbad |
| 10 | Elektrode |
| 11 | Nutbereich |
| 11a | an Nutbereich angrenzender Bereich |
| 11b | an Nutbereich angrenzender Bereich |
| 12 | Durchmesser innerhalb des Nutbereichs |
| 13 | Durchmesser der Elektrode |
| 14 | Elektrodenspitze |
| 15 | lichtbogenseitiges Ende |
| 16 | thermisch emittierte Elektronen |
| 17 | Stromübertragungspunkt |
| 18 | bestromter Bereich |
| 200 | Schweißbrenner, Wolfram-Inertgasschweißbrenner |
| 20 | Elektrode |
| 21 | Isolationsbereich |
| 21a | an Isolationsbereich angrenzender Bereich |
| 21b | an Isolationsbereich angrenzender Bereich |
| 22 | Durchmesser innerhalb des Isolationsbereichs |
| 23 | Durchmesser der Elektrode |
| 24 | Elektrodenspitze |
| 25 | lichtbogenseitiges Ende |
| 26 | thermisch emittierte Elektronen |
| 300 | Schweißbrenner, Wolfram-Inertgasschweißbrenner |
| 30 | Elektrode |
| 31 | Heizstromquelle |
| 32a | erster Stromkontaktpunkt |
| 32b | zweiter Stromkontaktpunkt |
| 33 | Heizstrom-Einstelleinrichtung |
| 34 | Temperatursensor |
| 36 | thermisch emittierte Elektronen |
| 400 | Schweißbrenner, Plasmaschweißbrenner |
| 410 | Plasmagasdüse |
| 420 | Plasmagas |
| 430 | Plasmajet |
| 40 | Elektrode |
| 41 | Pilotlichtbogenstromquelle |
| 43 | Einstelleinrichtung für den Pilotlichtbogenstrom |
| 44 | Pilotlichtbogen |
| 45 | Temperatursensor |
| 46 | thermisch emittierte Elektronen |

**Patentansprüche**

1. Schweißbrenner (100, 200, 300, 400) zum Schweißen oder Schneidbrenner zum Schneiden mittels eines Lichtbogens (120) mit einer nicht abschmelzenden Elektrode (10, 20, 30, 40), wobei die Elektrode (10, 20, 30, 40) dazu eingerichtet ist, mit einem Lichtbogenstrom bestromt zu werden,
**dadurch gekennzeichnet, dass**

   - die Elektrode (10) einen Nutbereich (11) aufweist, wobei die Elektrode (10) in diesem Nutbereich (11) einen geringeren Durchmesser (12) aufweist als in den an diesen Nutbereich (11) angrenzenden Bereichen (11 a, 11 b) der Elektrode (10),

   und/oder dass

   - die Elektrode (20) einen Isolationsbereich (21) aufweist, wobei zumindest ein Teil der Querschnittsfläche der Elektrode (20) in dem Isolationsbereich (21) aus einem schlecht leitenden oder nicht leitenden Material gebildet ist,

   und/oder dass

   - die Elektrode (30) dazu eingerichtet ist, zwischen zwei Stromkontaktpunkten (32a, 32b) mit einem Heizstrom unabhängig von dem Lichtbogenstrom bestromt zu werden

   und/oder dass

   - der Schweißbrenner (400) oder Schneidbrenner als ein Plasmaschweißbrenner zum Plasmaschweißen bzw. als ein Plasmaschneidbrenner zum Plasmaschneiden ausgebildet ist, wobei die Elektrode (40) und ein weiteres Element (410) des Plasmaschweißbrenners (400) bzw. des Plasmaschneidbrenners dazu eingerichtet sind, mit einem Pilotlichtbogenstrom bestromt zu werden, wobei eine Einstelleinrichtung (43) für den Pilotlichtbogenstrom vorhanden ist, mittels derer der Pilotlichtbogenstrom in Abhängigkeit von dem Lichtbogenstrom einstellbar ist.

2. Schweißbrenner (100, 200) oder Schneidbrenner nach Anspruch 1, wobei der Nutbereich (11) und/oder der Isolationsbereich (21) vergleichsweise nahe an dem lichtbogenseitigen Ende (15, 25) der Elektrode (10, 20) in Relation zu der gesamten axialen Ausdehnung der Elektrode (10, 20) angeordnet sind.

3. Schweißbrenner (200) oder Schneidbrenner nach Anspruch 1 oder 2, wobei die gesamte Querschnittsfläche der Elektrode (20) in dem Isolationsbereich (21) aus dem schlecht leitenden oder nicht leitenden Material gebildet ist.

4. Schweißbrenner (300) oder Schneidbrenner nach einem der vorstehenden Ansprüche, wobei die Elektrode (30) an den zwei Stromkontaktpunkten (32a, 32b) mit einer Heizstromquelle (31) zur Bestromung mit dem Heizstrom verbunden ist.

5. Schweißbrenner (100, 200, 300, 400) oder Schneidbrenner nach einem der vorstehenden Ansprüche, wobei die Elektrode (10, 20, 30, 40) aus reinem Wolfram, aus Hafnium, aus Zirkonium, aus Tantal oder aus Wolfram mit Dotierungen, insbesondere Dotierungen aus Cer, Thorium, Lanthan und/oder anderen seltenen Erden, ausgebildet ist.

6. Schweißbrenner (300, 400) oder Schneidbrenner nach einem der vorstehenden Ansprüche, aufweisend einen Temperatursensor (34, 45), der dazu eingerichtet ist, eine Temperatur der Elektrode (30, 40) zu bestimmen.

7. Verfahren zum Schweißen oder Schneiden mittels eines Lichtbogens (120), wobei eine nicht abschmelzende Elektrode (10, 20, 30, 40) mit einem Lichtbogenstrom bestromt wird, wobei der Lichtbogen (120) zwischen der nicht abschmelzenden Elektrode (10, 20, 30, 40) und einem zu schweißenden oder zu schneidenden Werkstück (151) brennt, **dadurch gekennzeichnet, dass**

    - eine Elektrode (10) verwendet wird, die einen Nutbereich (11) aufweist, wobei die Elektrode (10) in diesem Nutbereich (11) einen geringeren Durchmesser (12) aufweist als in den an diesen Nutbereich (11) angrenzenden Bereichen (11a, 11b) der Elektrode (10),

    und/oder dass

    - eine Elektrode (20) verwendet wird, die einen Isolationsbereich (21) aufweist, wobei zumindest ein Teil der Querschnittsfläche der Elektrode (20) in dem Isolationsbereich (21) aus einem schlecht leitenden oder nicht leitenden Material gebildet ist,

    und/oder dass

    - die Elektrode (30) zwischen zwei Stromkontaktpunkten (32a, 32b) mit einem Heizstrom unabhängig von dem Lichtbogenstrom bestromt wird,

    und/oder dass

    - ein Plasmaschweißen oder Plasmaschneiden durchgeführt wird, wobei die Elektrode (40) und ein weiteres Element (410) eines die Elektrode (40) enthaltenden Plasmaschweißbrenners (400) bzw. Plasmaschneidbrenners mit einem Pilotlichtbogenstrom bestromt werden, wobei der Pilotlichtbogenstrom in Abhängigkeit von dem Lichtbogenstrom eingestellt wird.

8. Verfahren nach Anspruch 7, wobei der Pilotlichtbogenstrom erhöht wird, wenn der Lichtbogenstrom reduziert wird.

9. Verfahren nach Anspruch 7 oder 8, wobei der Pilotlichtbogenstrom reduziert wird, wenn der Lichtbogenstrom erhöht wird.

10. Verfahren nach Anspruch 9, wobei der Pilotlichtbogenstrom reduziert wird, wenn der Lichtbogenstrom einen ersten Grenzwert erreicht, insbesondere 100 A.

11. Verfahren nach Anspruch 9 oder 10, wobei der Pilotlichtbogenstrom abgeschaltet wird, wenn der Lichtbogenstrom einen zweiten Grenzwert erreicht, insbesondere 200 A.

12. Verfahren nach einem der Ansprüche 7 bis 11, wobei die Elektrode (30) mit dem Heizstrom bestromt wird, bevor der Lichtbogen (120) gezündet wird.

13. Verfahren nach einem der Ansprüche 7 bis 12, wobei der Heizstrom in Abhängigkeit von einer Temperatur der Elektrode (30) eingestellt wird.

14. Elektrode (10, 20, 30, 40) für einen Schweißbrenner (100, 200, 300, 400) zum Schweißen oder einen Schneidbrenner zum Schneiden mittels eines Lichtbogens (120), wobei die Elektrode (10, 20, 30, 40) nicht abschmelzend ist und wobei die Elektrode (10, 20, 30, 40) dazu eingerichtet ist, mit einem Lichtbogenstrom bestromt zu werden, **dadurch gekennzeichnet, dass**

    - die Elektrode (10) einen Nutbereich (11) aufweist, wobei die Elektrode (10) in diesem Nutbereich (11) einen geringeren Durchmesser (12) aufweist, als in den an diesen Nutbereich (11) angrenzenden Bereichen (11 a, 11 b) der Elektrode (10),

und/oder dass

    - die Elektrode (20) einen Isolationsbereich (21) aufweist, wobei zumindest ein Teil der Querschnittsfläche der Elektrode (20) in dem Isolationsbereich (21) aus einem schlecht leitenden oder nicht leitenden Material gebildet ist,

und/oder dass

    - die Elektrode (30) dazu eingerichtet ist, zwischen zwei Stromkontaktpunkten (32a, 32b) mit einem Heizstrom unabhängig von dem Lichtbogenstrom bestromt zu werden.

und/oder dass

    - die Elektrode (40) als eine Elektrode (40) für einen Plasmaschweißbrenner (400) oder einen Plasmaschneidbrenner ausgebildet ist, wobei die Elektrode (40) dazu eingerichtet ist, mit einem Pilotlichtbogenstrom bestromt werden, wobei der Pilotlichtbogenstrom in Abhängigkeit von dem Lichtbogenstrom einstellbar ist.

**15.** Verwendung einer Elektrode (10) für einen Schweißbrenner (100) zum Schweißen oder für einen Schneidbrenner zum Schneiden mittels eines Lichtbogens (120), wobei die Elektrode (10) nicht abschmelzend ist und mit einem Lichtbogenstrom bestromt wird,
**dadurch gekennzeichnet, dass**

    - die Elektrode (10) einen Nutbereich (11) aufweist, wobei die Elektrode (10) in diesem Nutbereich (11) einen geringeren Durchmesser (12) aufweist, als in den an diesen Nutbereich (11) angrenzenden Bereichen (11a, 11b) der Elektrode (10),
    - um eine Temperaturverteilung in der der Elektrode (10) unabhängig von einer Stromstärke des Lichtbogenstroms zu beeinflussen.

**16.** Verwendung einer Elektrode (20) für einen Schweißbrenner (200) zum Schweißen oder für einen Schneidbrenner zum Schneiden mittels eines Lichtbogens (120), wobei die Elektrode (20) nicht abschmelzend ist und mit einem Lichtbogenstrom bestromt wird,
**dadurch gekennzeichnet, dass**

    - die Elektrode (20) einen Isolationsbereich (21) aufweist, wobei zumindest ein Teil der Querschnittsfläche der Elektrode (20) in dem Isolationsbereich (21) aus einem schlecht leitenden oder nicht leitenden Material gebildet ist,
    - um eine Temperaturverteilung in der der Elektrode (20) unabhängig von einer Stromstärke des Lichtbogenstroms zu beeinflussen.

**17.** Verwendung einer Elektrode (30) für einen Schweißbrenner (300) zum Schweißen oder für einen Schneidbrenner zum Schneiden mittels eines Lichtbogens (120), wobei die Elektrode (30) nicht abschmelzend ist und mit einem Lichtbogenstrom bestromt wird,
**dadurch gekennzeichnet, dass**

    - die Elektrode (30) zwischen zwei Stromkontaktpunkten (32a, 32b) mit einem Heizstrom unabhängig von dem Lichtbogenstrom bestromt wird,
    - um eine Temperaturverteilung in der der Elektrode (30) unabhängig von einer Stromstärke des Lichtbogenstroms zu beeinflussen.

**18.** Verwendung einer Elektrode (40) für einen Plasmaschweißbrenner (400) zum Plasmaschweißen oder für einen Plasmaschneidbrenner zum Plasmaschneiden mittels eines Lichtbogens (120), wobei die Elektrode (40) nicht abschmelzend ist und mit einem Lichtbogenstrom bestromt wird,
**dadurch gekennzeichnet, dass**

    - die Elektrode (40) und ein weiteres Element (410) des Plasmaschweißbrenners (400) bzw. Plasmaschneidbrenners mit einem Pilotlichtbogenstrom bestromt werden, wobei der Pilotlichtbogenstrom in Abhängigkeit von dem Lichtbogenstrom eingestellt wird
    - um eine Temperaturverteilung in der der Elektrode (40) unabhängig von einer Stromstärke des Lichtbogenstroms zu beeinflussen.

EP 2 957 373 A1

Fig. 1

EP 2 957 373 A1

Fig. 2

Fig.3

EP 2 957 373 A1

Fig. 4

Europäisches
Patentamt

European
Patent Office

Office européen
des brevets

**EUROPÄISCHER RECHERCHENBERICHT**

Nummer der Anmeldung

EP 14 00 2374

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 756 643 B1 (GEN ELECTRIC [US]) 5. Juli 2000 (2000-07-05) | 1,2,5,7, 14,16 | INV. B23K9/013 |
| Y | * Absätze [0028] - [0034]; Abbildungen 2A-2C, 4, 5 * | 3 | B23K9/073 B23K9/167 B23K9/29 |
| X | US 5 670 072 A (OFFER HENRY PETER [US] ET AL) 23. September 1997 (1997-09-23) | 1,2,5,7, 14,16 | B23K10/00 B23K10/02 |
| Y | * Ansprüche 4,5; Abbildungen 1-6 * | 3 | B23K35/36 B23K35/02 |
| X | US 5 649 355 A (OFFER HENRY PETER [US]) 22. Juli 1997 (1997-07-22) | 1,2,5,7, 14,16 | |
| Y | * Ansprüche 5,6,11,12; Abbildungen 1-8 * | 3 | |
| Y | JP S61 108492 A (TOYOTA MOTOR CORP) 27. Mai 1986 (1986-05-27) * Zusammenfassung; Abbildung 2 * | 3 | |
| X | EP 2 457 681 A1 (KJELLBERG STIFTUNG [DE]) 30. Mai 2012 (2012-05-30) * Absätze [0006], [0012], [0031], [0036] - [0042]; Abbildungen 1-4 * | 1,2,5,7, 14,15 | |
| X | JP S62 151074 U (N/A) 25. September 1987 (1987-09-25) * das ganze Dokument * | 1,7,14, 15 | RECHERCHIERTE SACHGEBIETE (IPC) B23K H05H H01J |
| Y | JP 2000 176645 A (MATSUSHITA ELECTRIC IND CO LTD) 27. Juni 2000 (2000-06-27) * Absätze [0007] - [0017]; Abbildung 4 * | 1,4-7, 12-14,17 | |
| Y | CA 1 217 533 A1 (WESTINGHOUSE ELECTRIC CORP) 3. Februar 1987 (1987-02-03) * Seiten 4,5; Abbildung 2 * | 1,4-7, 12-14,17 | |

-/--

~~Der vorliegende Recherchenbericht wurde für alle Patentans~~prüche erstellt

| Recherchenort | Abschlußdatum der Recherche | Prüfer |
|---|---|---|
| München | 29. Juli 2015 | Hernanz, Sonsoles |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes
    Dokument

EPO FORM 1503 03.82 (P04C03)

Europäisches
Patentamt

European
Patent Office

Office européen
des brevets

## EUROPÄISCHER RECHERCHENBERICHT

**Nummer der Anmeldung**

EP 14 00 2374

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 866 869 A (SCHNEIDER JOSEPH [US] ET AL) 2. Februar 1999 (1999-02-02) | 1,7-11, 14,18 | |
| Y | * Spalte 1, Zeile 14 - Zeile 46; Ansprüche 1-33 * <br> * Spalte 3, Zeile 51 - Zeile 53 * <br> * Spalte 4, Zeile 3 - Zeile 24 * <br> ----- | 5,6 | |
| Y | US 2013/193116 A1 (WADA KATSUNORI [JP] ET AL) 1. August 2013 (2013-08-01) <br> * Zusammenfassung; Anspruch 1; Abbildung 1 * <br> ----- | 5 | |
| Y | US 6 429 400 B1 (SAWADA YASUSHI [JP] ET AL) 6. August 2002 (2002-08-06) <br> * Spalte 13, Zeile 43 - Zeile 52; Abbildung 1 * <br> ----- | 6 | |

**RECHERCHIERTE SACHGEBIETE (IPC)**

~~Der vorliegende Recherchenbericht wurde für alle Patentans~~prüche erstellt

| Recherchenort | Abschlußdatum der Recherche | Prüfer |
|---|---|---|
| München | 29. Juli 2015 | Hernanz, Sonsoles |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.................................................................................................
& : Mitglied der gleichen Patentfamilie, übereinstimmendes
    Dokument

EPO FORM 1503 03.82 (P04C03)

Europäisches
Patentamt
European
Patent Office
Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

```
Siehe Ergänzungsblatt B
```

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☒ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

```
15-18(vollständig); 1-14(teilweise)
```

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

EP 2 957 373 A1

Europäisches
Patentamt
European
Patent Office
Office européen
des brevets

**MANGELNDE EINHEITLICHKEIT
DER ERFINDUNG
ERGÄNZUNGSBLATT B**

Nummer der Anmeldung

EP 14 00 2374

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 16(vollständig); 1-3, 5, 7, 14(teilweise)

   Nutzung einer Elektrode mit einem Isolationsbereich.
   ---

2. Ansprüche: 15(vollständig); 1, 2, 5, 7, 14(teilweise)

   Nutzung einer Elektrode mit einem Nutbereich.
   ---

3. Ansprüche: 17(vollständig); 1, 4-7, 12-14(teilweise)

   Erwärmung der Elektrode mit einem Heizstrom.
   ---

4. Ansprüche: 18(vollständig); 1, 5-11, 14(teilweise)

   Bestromung der Elektrode mit einem Pilotlichtbogenstrom und Zuführung eines Plasmagases.
   ---

5. Ansprüche: 1-3, 5, 7, 14(alle teilweise)

   Nutzung einer Elektrode mit einem Nutbereich und einem Isolationsbereich.
   ---

6. Ansprüche: 1, 2, 4-7, 12-14(alle teilweise)

   Nutzung einer Elektrode mit einem Nutbereich und Erwärmung der Elektrode mit einem Heizstrom.
   ---

7. Ansprüche: 1, 2, 5-11, 14(alle teilweise)

   Nutzung einer Elektrode mit einem Nutbereich, und Bestromung der Elektrode mit einem Pilotlichtbogenstrom und Zuführung eines Plasmagases.
   ---

8. Ansprüche: 1-7, 14(alle teilweise)

   Nutzung einer Elektrode mit einem Isolationsbereich und Erwärmung der Elektrode mit einem Heizstrom.
   ---

9. Ansprüche: 1-3, 5-11, 14(alle teilweise)

   Nutzung einer Elektrode mit einem Isolationsbereich, und Bestromung der Elektrode mit einem Pilotlichtbogenstrom und Zuführung eines Plasmagases.

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 14 00 2374

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

---

10. Ansprüche: 1, 4-14(alle teilweise)

     Erwärmung der Elektrode mit einem Heizstrom, und Bestromung der Elektrode mit einem Pilotlichtbogenstrom und Zuführung eines Plasmagases.
     ---

11. Ansprüche: 1-7, 12-14(alle teilweise)

     Nutzung einer Elektrode mit einem Nutbereich und einem Isolationsbereich, und Erwärmung der Elektrode mit einem Heizstrom.
     ---

12. Ansprüche: 1-3, 5-11, 14(alle teilweise)

     Nutzung einer Elektrode mit einem Nutbereich und einem Isolationsbereich, und Bestromung der Elektrode mit einem Pilotlichtbogenstrom und Zuführung eines Plasmagases.
     ---

13. Ansprüche: 1, 2, 4-14(alle teilweise)

     Nutzung einer Elektrode mit einem Nutbereich, Erwärmung der Elektrode mit einem Heizstrom, und Bestromung der Elektrode mit einem Pilotlichtbogenstrom und Zuführung eines Plasmagases.
     ---

14. Ansprüche: 1-14(teilweise)

     Nutzung einer Elektrode mit einem Isolationsbereich, Erwärmung der Elektrode mit einem Heizstrom, und Bestromung der Elektrode mit einem Pilotlichtbogenstrom und Zuführung eines Plasmagases.
     ---

15. Ansprüche: 1-14(teilweise)

     Nutzung einer Elektrode mit einem Nutbereich und einem Isolationsbereich, Erwärmung der Elektrode mit einem Heizstrom, und Bestromung der Elektrode mit einem Pilotlichtbogenstrom und Zuführung eines Plasmagases.
     ---

**ANHANG ZUM EUROPÄISCHEN RECHERCHENBERICHT
ÜBER DIE EUROPÄISCHE PATENTANMELDUNG NR.**

EP 14 00 2374

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-07-2015

| Im Recherchenbericht angeführtes Patentdokument | Datum der Veröffentlichung | Mitglied(er) der Patentfamilie | Datum der Veröffentlichung |
|---|---|---|---|
| EP 0756643 B1 | 05-07-2000 | CA 2185996 A1<br>DE 69517808 D1<br>DE 69517808 T2<br>EP 0756643 A1<br>ES 2147609 T3<br>JP 3137985 B2<br>JP H09512486 A<br>WO 9529266 A1 | 02-11-1995<br>10-08-2000<br>08-03-2001<br>05-02-1997<br>16-09-2000<br>26-02-2001<br>16-12-1997<br>02-11-1995 |
| US 5670072 A | 23-09-1997 | TW 309618 B<br>US 5670072 A | 01-07-1997<br>23-09-1997 |
| US 5649355 A | 22-07-1997 | US 5527441 A<br>US 5649355 A | 18-06-1996<br>22-07-1997 |
| JP S61108492 A | 27-05-1986 | KEINE | |
| EP 2457681 A1 | 30-05-2012 | DE 102010053721 A1<br>EP 2457681 A1 | 31-05-2012<br>30-05-2012 |
| JP S62151074 U | 25-09-1987 | JP H0331507 Y2<br>JP S62151074 U | 04-07-1991<br>25-09-1987 |
| JP 2000176645 A | 27-06-2000 | JP 3906590 B2<br>JP 2000176645 A | 18-04-2007<br>27-06-2000 |
| CA 1217533 A1 | 03-02-1987 | KEINE | |
| US 5866869 A | 02-02-1999 | AU 698460 B2<br>AU 5267998 A<br>CA 2225942 A1<br>DE 69815812 D1<br>DE 69815812 T2<br>EP 0951961 A1<br>US 5866869 A | 29-10-1998<br>27-08-1998<br>24-08-1998<br>31-07-2003<br>18-12-2003<br>27-10-1999<br>02-02-1999 |
| US 2013193116 A1 | 01-08-2013 | JP 2012081480 A<br>US 2013193116 A1<br>WO 2012046799 A1 | 26-04-2012<br>01-08-2013<br>12-04-2012 |
| US 6429400 B1 | 06-08-2002 | KEINE | |

EPO FORM P0461

Für nähere Einzelheiten zu diesem Anhang : siehe Amtsblatt des Europäischen Patentamts, Nr.12/82